Europäisches Patentamt

European Patent Office

Office européen des brevets

(19)

(11) Publication number: **0 140 588**
**B1**

(12)

# EUROPEAN PATENT SPECIFICATION

(45) Date of publication of patent specification: **04.05.88**

(51) Int. Cl.⁴: **G 21 C 3/32**

(21) Application number: **84306629.1**

(22) Date of filing: **28.09.84**

(54) **Nuclear reactor fuel assembly with a removable top nozzle.**

(30) Priority: **30.09.83 US 537775**

(43) Date of publication of application:
**08.05.85 Bulletin 85/19**

(45) Publication of the grant of the patent:
**04.05.88 Bulletin 88/18**

(84) Designated Contracting States:
**BE CH DE FR GB LI SE**

(56) References cited:
**EP-A-0 098 774**
**FR-A-2 493 024**
**FR-A-2 533 350**
**FR-A-2 533 741**
**US-A-4 219 386**

(73) Proprietor: **WESTINGHOUSE ELECTRIC CORPORATION**
**Westinghouse Building Gateway Center**
**Pittsburgh Pennsylvania 15235 (US)**

(72) Inventor: **Shallenberger, John Milton**
**213 Falconhurst Drive**
**Pittsburgh Pennsylvania (US)**
Inventor: **Ferlan, Stephen Joseph**
**895 Rita Drive**
**Pittsburgh Pennsylvania (US)**

(74) Representative: **van Berlyn, Ronald Gilbert**
**23, Centre Heights**
**London, NW3 6JG (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates generally to fuel assemblies for nuclear reactors and, more particularly, to an improved attaching structure for removably mounting the top nozzle of a fuel assembly on the upper ends of the control rod guide thimbles.

In most nuclear reactors the core portion comprises a large number of elongate fuel elements or rods grouped in and supported by frameworks referred to as fuel assemblies. The fuel assemblies are generally elongate and receive support and alignment from upper and lower transversely extending core support plates. In the most common configuration, the longitudinal axis of the core support barrel extends vertically and the various fuel assemblies are also arranged vertically, resting on a lower support plate. Conventional designs of these fuel assemblies include a plurality of fuel rods and control rod guide thimbles held in an organized array by transverse grids spaced vertically along the fuel assembly and attached to the control rod guide thimbles. Top and bottom nozzles are secured to the control rod guide thimbles at the opposite ends thereof to form an integral fuel assembly structure. The top and bottom nozzles extend slightly above and below, respectively, the ends of the fuel rods, capturing the rods therebetween.

During operation of a nuclear reactor, fuel rods of a fuel assembly may occasionally develop cracks, resulting primarily from internal stresses, which may allow fission products to seep into the primary coolant of the reactor. Such products may also be released into a flooded reactor cavity during refueling operations or into the coolant circulated through pools 'where the spent fuel assemblies are stored. Since the fuel rods are part of an integral assembly of guide tubes welded to the top and bottom nozzles, it is difficult to detect and remove any failed rods. In order to reach them, it is necessary first to remove the affected assembly from the nuclear reactor core, and then to break the welds which secure the nozzles to the control rod guide thimbles. The destructive action necessary to break the welds often damages the guide thimbles and nozzles to such an extent as to make rewelding impossible, thus rendering the fuel assembly unfit for further use in a reactor.

In view of the high costs of replacing fuel assemblies, and in order to minimize their operating and maintenance costs, both domestic and foreign utilities have indicated an interest in reconstitutable fuel assemblies.

The nuclear reactor industry has responded to this demand by providing reconstitutable fuel assemblies with removable top nozzles, most of them employing threaded arrangements for attaching the top nozzles to the control rod guide thimbles, which threaded arrangements enable the top nozzles to be removed to gain access to the fuel rods in the skeleton assembly.

One type of such reconstitutable fuel assemblies is disclosed in U.S. Patents US-A-3,770,583 and US-A-814,667 each showing a top nozzle having a hold-down device incorporated therein and including coil springs disposed about upright alignment posts which are threaded through an end plate, with fastener nuts located on the underside of the plate. An upper hold-down plate is slidably mounted on the alignment posts, and the coil springs are interposed, in compression, between the hold-down plate and the end plate. A radial shoulder on the upper end of each alignment posts retain the hold-down plate on the posts. Endeavouring to improve on this type of assembly, the U,S-A-3,922,259 discloses another threaded joint arrangement, and still another type of threaded arrangement used for removably attaching a top nozzle on control-rod guide thimbles are described in U,S-A-3,828,868.

These conventional reconstitutable fuel assemblies employing threaded arrangements not only suffer from drawbacks such as high manufacturing costs, complicated design, and difficulty in removing and re-attaching the top nozzle, but, they also have been found to present a problem after irradiation insofar as threaded connections tend to become corroded and inoperable, thus requiring some destructive action to be taken to the nozzle and/or the guide thimbles which results in costly damage to those components and may even render the fuel assembly unfit for further use.

In the document EP-A1-0098774, published 18.01,84 (FR-A-2529704 published 06.01,84) there are disclosed some non-threaded arrangements for separably affixing a guide thimble to the end structure of a nuclear fuel assembly. As shown therein, a connecting sleeve secured to the upper end of a guide thimble has a longitudinally slotted upper end portion thereof inserted into a passageway formed through an end plate of the fuel assembly and having an annular recess with which mates an annular bulge on the connecting sleeve. A locking ring releasably retained in the passageway has a portion thereof inserted into the slotted end portion of the connecting sleeve so as to prevent collapse thereof and, hence, inadvertent dislodgement of the bulge from the annular recess. When it is desired to separate the end structure of the fuel assembly from the guide thimble, the locking ring is withdrawn from the connecting sleeve to enable the slotted end portion of the latter to collapse and thereby enable the end structure to be separated from the guide thimble. This arrangement shown in EP-A1-0098774 requires no threading but does require some intricate machining of the elements involved in order to enable them to perform their desired functions, including safeguarding against improper positioning of the end structure upon the guide thimble during assembly. Reference is also directed to FR-A-2493024.

The invention has for its principal object to provide a relatively simple yet effective attachment structure of the non-threading type.

Accordingly, the invention consists in a fuel assembly including a control-rod guide-thimble, a top nozzle including a transverse plate, and an attaching structure removably mounting the top nozzle on the guide thimble, said attaching structure comprising a passageway which extends through said plate and defines an outer socket having therein an annular groove, said passageway comprising a lower bore which has said annular groove located therein in spaced relationship with respect to both ends of the lower bore, and an additional bore located directly above said lower bore and communicating therewith, said lower bore having a diameter substantially equal to the outer diameter of an inner socket and having said upper end portion of the latter inserted therein; a sleeve-like inner socket on the upper end of the guide thimble which has a circumferential bulge formed on an upper end portion thereof and adapted to mate with said annular groove, said sleeve-like inner socket being elastically movable between a compressed releasing position enabling the inner socket to be inserted into and removed from the outer socket, and an expanded locking position for engaging said bulge with said groove and thereby interlocking the inner and outer sockets with each other; and an elongate locking member · removably inserted into said inner socket, within the outer socket, in relationship therewith for retaining the inner socket in its locking position and thereby maintaining attachment of the top nozzle to the guide thimble, said locking member being a tube having an outer diameter substantially equal to the inner diameter of the sleeve-like inner socket and extending into the latter through said additional bore, characterized in that said additional bore is smaller in diameter than said lower bore so as to form, at the intersection therewith, a downwardly facing ledge adapted to cooperate with the upper end of the sleeve-like inner socket to assist in aligning said circumferential bulge with said annular groove, the inner socket allows the inner socket to be moved to its releasing position, thereby enabling the top nozzle to be detached from the guide thimble.

In a preferred embodiment of the invention, the outer socket is in the form of a passageway, with an annular groove therein, defined in a lower adapter plate of the top' nozzle. The inner socket is a sleeve having a circumferential bulge formed on an upper end portion thereof. The lower end of the sleeve is connected to the upper end of the guide thimble. To allow the bulge on the sleeve to be inserted into and removed from the annular groove of the passageway, the sleeve is provided with at least one elongated slot formed in its upper end portion and extending through the bulge so as to permit inward elastic collapse of the bulge to its compressed releasing position.

The attaching structure further includes means for securing the locking member in its inserted position within the inner socket. In one embodiment shown herein, the securing means takes the form of a thin-wall annular flange disposed on the upper end of the locking member and deformed into indentations or cavities provided in the top nozzle. In another embodiment shown, the securing means comprises an upper peripheral edge portion of the locking member which is flared outwardly so as to have an outer diameter slightly larger than the inner diameter of the upper end of the passageway defining the outer socket in the adapter plate of the top nozzle. Thus, when the locking member is inserted into the passageway, a tight friction fit is formed with the upper annular wall portion of the passageway. The securing means may comprise also several bulges or nibs formed, after insertion of the locking member into the passageway, into the upper portion of the locking member so that the bulges extend into the circumferential groove of the adapter plate defined in the passageway.

Preferred embodiments of the invention will now be described, by way of example only, with reference to the accompanying drawings, in which:

Figure 1 is a partially sectioned, elevational view, with parts broken away for clarity, of a nuclear fuel assembly to which the invention is shown applied;

Figure 2 is a sectioned, exploded view of an attaching structure embodying the invention;

Figure 3 is a sectioned, side elevational view of the attaching structure in its assembled state;

Figure 4 is a top plan view of the assembled attaching structure taken along line 4-4 of Fig. 3;

Figure 5 is a cross-sectional view taken along line 5-5 of Fig. 3;

Figures 6, 7 and 8 are views similar to Fig. 3 but showing different modifications of the means for securing the locking tube in its inserted position;

Figure 9 is an exploded view similar to Fig. 2 but showing an alternative embodiment of the invention;

Figure 10 is a top plan view, taken along line 10-10 of Fig. 9, of the inner socket of the attaching structure shown in Fig. 9;

Figure 11 is an enlarged fragmentary view of the upper end of a modified inner socket;

Figure 12 is a sectional view taken along line 12-12 of Fig. 9;

Figure 13 is an enlarged fragmentary view of a modified upper end portion of the locking member of the attaching structure shown in Fig. 9;

Figure 14 is a sectional view of the attaching structure of Fig. 9 in its assembled state;

Figure 15 is a top plan view taken along line 15-15 of Fig. 14; and

Figure 16 is a sectional view showing a modification of the inner socket of the attaching structure embodying the invention.

In the drawings, like reference characters designate like or corresponding parts throughout the several iews. Furthermore it should be understood that terms like "forward", "rearward", "left", "right", "upward", "downward", and the like, will be used herein only as words of convenience and should not be construed as limiting terms.

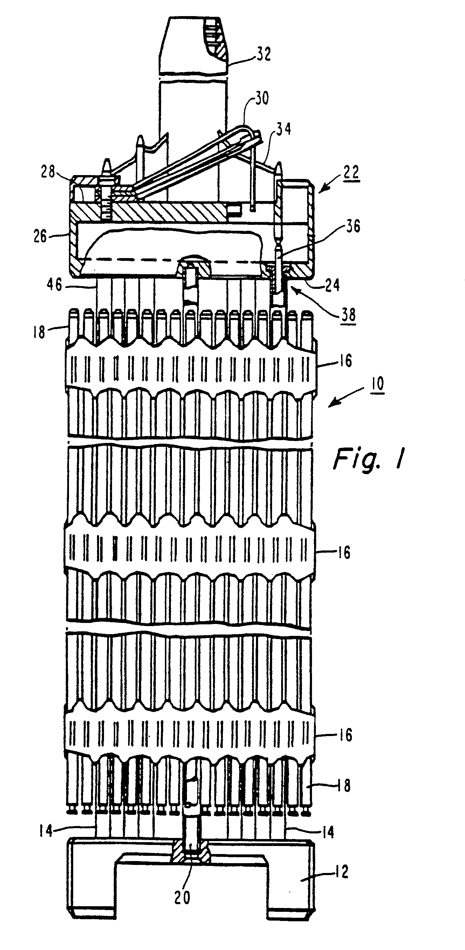

Referring now to the drawings, the fuel assembly illustrated in Fig. 1 and indicated generally by the numeral 10 basically comprises a lower end structure or bottom nozzle 12 for supporting the assembly on a lower core plate (not shown) in the core region of a reactor (not shown); a number of longitudinally extending control-rod guide tubes or thimbles 14 projecting upward from the bottom nozzle 12; a plurality of transverse grids 16 axially spaced along the guide thimbles 14; an organized array of elongate fuel rods 18 transversely spaced apart and supported by the grids 16; an instrumentation tube 20 located in the center of the assembly; and an upper end structure or top nozzle 22 attached to the upper ends of the guide thimbles 14, in a manner fully described below, to form an integral assembly capable of being conventionally handled but without damaging the assembly components.

The top nozzle 22 includes a transversely extending adapter plate 24 having upstanding sidewalls 26 extending from the peripheral edges thereof and defining an enclosure or housing, an annular radial flange 28 extending from the sidewalls 26 at the top thereof. Suitably clamped to the annular flange 28 are leaf springs 30 (only one of which is shown in Fig. 1) which cooperate with the upper core plate (not shown) in a conventional manner to prevent hydraulic lifting of the fuel assembly caused by 'upward coolant flow, while allowing for changes in fuel assembly length due to core-induced thermal expansion and the like. Disposed within the opening defined by the annular flange 28 is a conventional rod-cluster control assembly 32 having radially extending flukes 34 which are connected to the upper ends of the control rods 36 for vertically moving the control rods in the control-rod guide thimbles 14 in a well known manner.

To form the fuel assembly 10, the transverse grids 16 are attached to the elongate guide thimbles 14 at predetermined axially spaced locations; the fuel rods 18 are inserted through the grids 16; the lower nozzle 12 is suitably attached to the lower ends of the guide thimbles 14; and then the top nozzle 22 is attached to the upper ends of the guide thimbles 14 by means of the attaching structure embodying the invention and generally designated by the numeral 38.

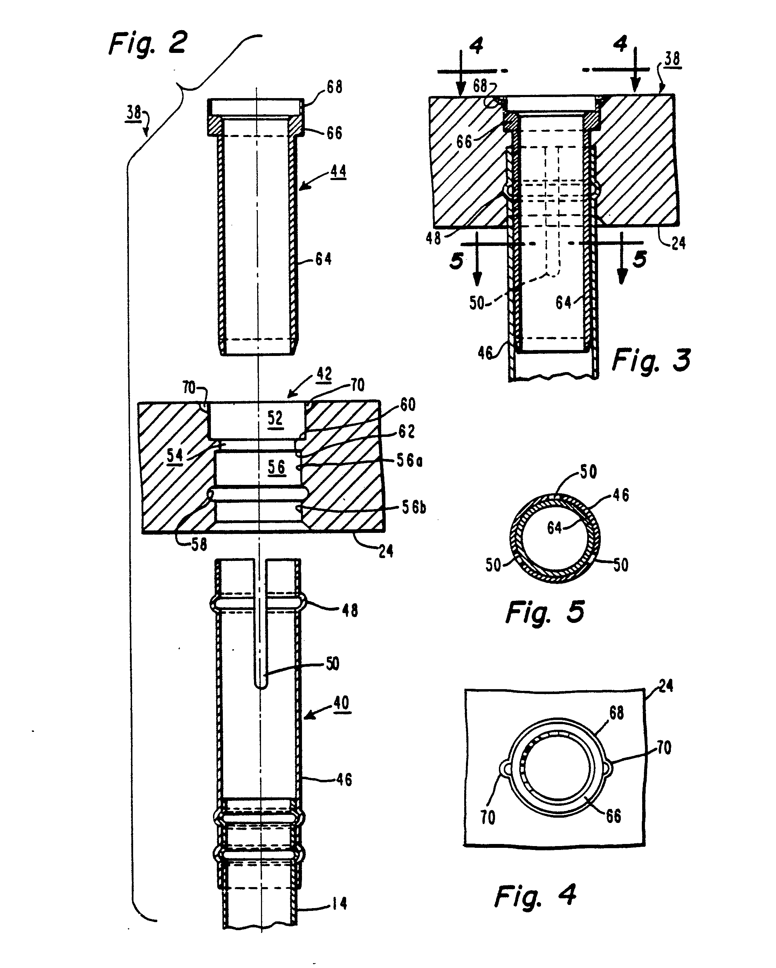

Referring to Figs. 2 to 5 and in particular, to Figs. 2 and 3, there will now be described a preferred embodiment of the attaching structure 38 for removably mounting the top nozzle 22 on the upper ends of the guide thimbles 14. Although each of the guide thimbles 14 is attached to the top nozzle 22, the following description will be directed to the attachment of only one guide thimble, the other guide thimbles being attached in the same manner. Basically, the attaching structure 38 comprises an inner socket 40 on the upper end of the guide thimble 14; an outer socket defined in the top nozzle 22; and a locking member 44 for retaining the inner socket 40 in locking engagement with the outer socket 42, thereby to removably attach the top nozzle 22 to the guide thimbles 14. Each of these three components, the outer socket 42, the inner socket 40, and the locking member 44, which make up the attaching structure 38 will now be discussed in detail.

As best seen from Fig. 2, the inner socket 40 is preferably in the form of an elongated sleeve 46 having its lower end bulge-fitted, in a manner known per se, onto the upper end of the guide thimble 14. The sleeve 46 has a circumferential bulge 48 formed on an upper end portion thereof and has formed in the latter at least one, preferably three (see Fig. 5), elongate longitudinal slots 50. The bulge 48 is shaped as an arc, for a purpose which will become readily apparent as the description is proceeding. The three longitudinal slots 50 are equally spaced circumferentially about the wall of the sleeve and extend axially from the top edge of the sleeve downwardly through and a short distance beyond the bulge 48. The purpose of the slots 50 is to permit elastic collapse or compression of the upper end portion of the sleeve 46 to a compressed releasing position enabling the inner socket 40 to be inserted into and removed from the outer socket 42. It should be noted that the sleeve 46, although shown herein attached to the thimble 14, could be attached to the upper grid 16, either as a modified version of the kind of sleeve employed with grids or as a sleeve separate from the common grid sleeve, with the upper grid 16 in turn bulge-fitted on the upper end of the guide thimble. Furthermore, it would be within the ambit of the invention to form the inner socket 40 as an integral upper end portion of the guide thimble by providing the latter itself with a circumferential bulge, such as bulge 48, and with elongate slots, such as slots 50.

Still referring to Fig. 2, the outer socket 42 is preferably in the form of an axial passageway defined in the adapter plate 24 of the top nozzle 22, and it comprises an upper top bore 52, an intermediate bore 54, and a lower bore 56, the lower bore having in its wall an annular groove 58 which divides the lower bore 54 into an upper segment 56a (above the groove 58) and a lower segment 56b (below the groove 58). The annular groove 58 has a configuration conforming to the arcuate shape of the bulge 48 on the sleeve 46. The top bore 52, middle bore 54, and lower bore 56 are all coaxial or, more specifically, axially aligned with each other. The top bore 52 has a diameter greater than the diameter of the middle bore 54, and the diameter of the middle bore 54 is smaller than the diameter of the lower bore 56. Preferably, the diameter of the middle bore 54 is equal to the inner diameter of the sleeve 46, the diameter of the lower bore 56 is equal to the outer diameter of the sleeve 46, and the diameter of annular groove 58 is equal to the outer diameter of the bulge 48 in its expanded locking position. The outer socket wall defines an upper ledge 60 at the intersection of the middle bore 54 with the upper bore 52, and a lower ledge 62 at the intersection of the middle bore 54 with the lower bore 56, the ledge 62 having a width substantially equal to the radial wall thickness of the sleeve 46. The arrangement, size and shape of the bores and annular recess of the outer socket 42, and the size and shape of the upper end portion of sleeve 46 with its bulge 48 (the inner socket 40) are such that, when the inner socket 40 is in its expanded locking position within the outer socket 42 (as seen in Fig. 3), the bulge 48 is in mating engagement with the annular groove 58, the top end or edge of the sleeve 46 abuts the lower ledge 62, the section of the sleeve above the bulge 48 is in snug contact with the upper segment 56a of the lower bore 56, and the section of the sleeve 46 below the bulge 48 is in snug contact with the lower segment 56b of the lower bore 56. The relationship is such as to produce a rigid or tight clearance fit between the inner socket 40 and outer socket 42. It should be noted here that the primary purpose of the lower ledge 62 is to serve as a stop or an alignment guide for proper axial positioning of the sleeve 46 in the passageway when the inner socket 40 is inserted into the outer socket 42.

Again referring to Fig. 2, the attaching structure 38 also includes the locking member 44 for retaining the inner socket 40 in its expanded locking position in the outer socket 42. Preferably, the locking member 44 is an elongated tube having a cylindrical or tubular body portion 64 and an enlarged radially extending shoulder or radial flange 66 formed on the upper end of the tube. The outer diameter of the body portion 64 is slightly less than the diameter of the middle bore 54, and likewise the inner diameter of sleeve 46, for snug slidable engagement therethrough in establishing a friction fit therebetween. The outer diameter of the enlarged shoulder 66 is slightly less than the diameter of the top bore 52. In the locking tube's inserted position, as seen in Fig. 3, the shoulder 66 is disposed in the top bore 52 of the adapter plate 24 and rests on the upper ledge 60 while the tubular body portion 64 extends through the middle bore 54 and into the upper end portion of sleeve 46. As readily apparent, the arrangement is such that the locking member 44, in its inserted position, retains the bulge 48 in its expanded locking engagement with the annular groove 58 and prevents it from moving to its compressed releasing position, thus maintaining the inner socket 40 in locking engagement with the outer socket 42, and thereby the attachment of top nozzle 22 on the upper ends of guide thimbles 14.

The improved attaching structure 38 further includes means for securing the locking member 44 in its inserted position within the inner socket 40 against displacement due to vibration forces and the like. As seen in Fig. 2, in the preferred embodiment, the securing means takes the form of an axial, thin-wall, circular flange 68 extending upward from the radial flange 66 of the locking-member 44, which axial flange 68 is deformable so that portions thereof can become lodged in indentations or cavities 70 formed in the adapter plate 24 adjacent the top bore 52 (see Figs. 3 and 4).

Briefly, and referring to Figs. 2 and 3, the top nozzle 22 is attached to and detached from the guide thimbles 14 in the following manner: The upper end portion of sleeve 46 with the bulge 48 thereon is compressed and inserted into the lower bore 56 of the outer socket 42 until the bulge 48 reaches and snaps into the annular groove 58 as the elastically compressed end portion of the sleeve 46 resiliently returns to its expanded locking position. Then the locking member 44 is inserted into the inner socket 40 to telescopically extend into the upper portion of the inner socket 40, thereby to maintain the bulge 48 is locking engagement with the groove 58. Finally, the axial flange 68 of the locking member 44 is deformed into the indentations 70. An alternative way of attaching the top nozzle 22 would be to assemble the inner socket 40, the outer socket 42, and the locking member, in the manner described above, first as a subassembly, and then to bulge-fit the lower end of the sleeve 46 onto the upper end of the guide thimble 14. For detaching the top nozzle 22, the locking member 44 is rotated to break the locking engagement between the flange 68 and the indentations 70, whereupon the locking member 44 is withdrawn from the outer socket 42 and the adapter plate 24 is lifted up, thereby causing the bulge 48 to be cammed out of the groove 58 and thus permitting the outer socket 42, hence the nozzle 22, to be separated from the thimble 14.

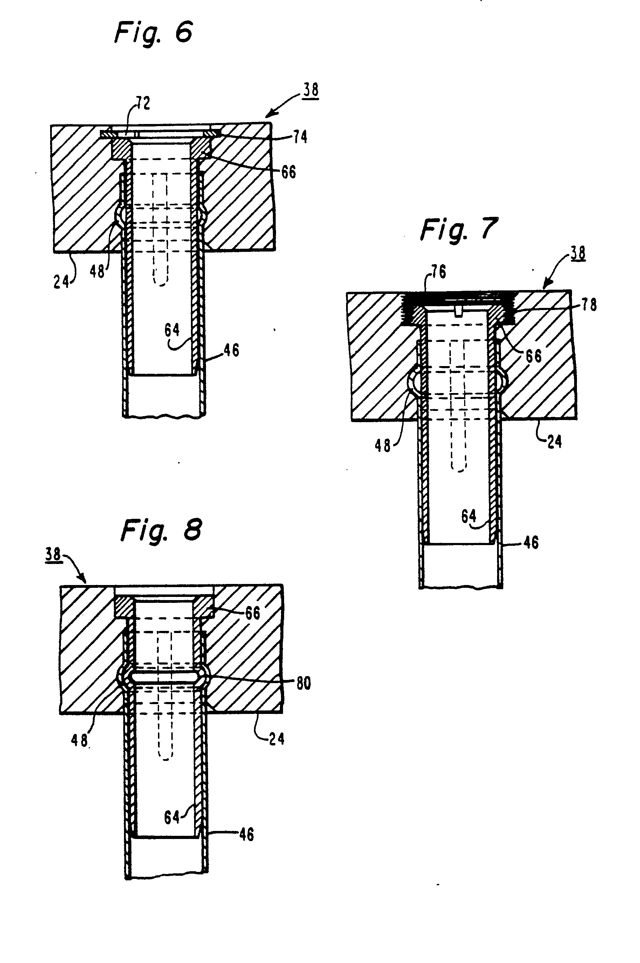

Figs. 6, 7 and 8 show alternative embodiments of the invention which are substantially identical to the preferred embodiment just described with reference to Figs. 2 and 3, except for the securing means employed to retain the locking member 44 in its proper position within the inner socket 40. Thus, in the alternative embodiment shown in Fig. 6, the securing means is a split snap ring 72 seated in an annular recess 74 in the top bore 52 of the adapter plate 24. The ring 72 engages the top surface of shoulder or radial flange 66 to prevent the locking member 44 from moving vertically upward and out of its locking position. In Fig. 7, the securing means takes the form of external threads 78 on the outer lateral surface of the radial flange 66 which threadedly engage internal threads 76 provided on the wall of the top bore 52. And in the alternative embodiment shown in Fig. 8, the securing means takes the form of a bulge-fit between the body portion 64 of the locking member 44 and the sleeve 46, as indicated at 80.

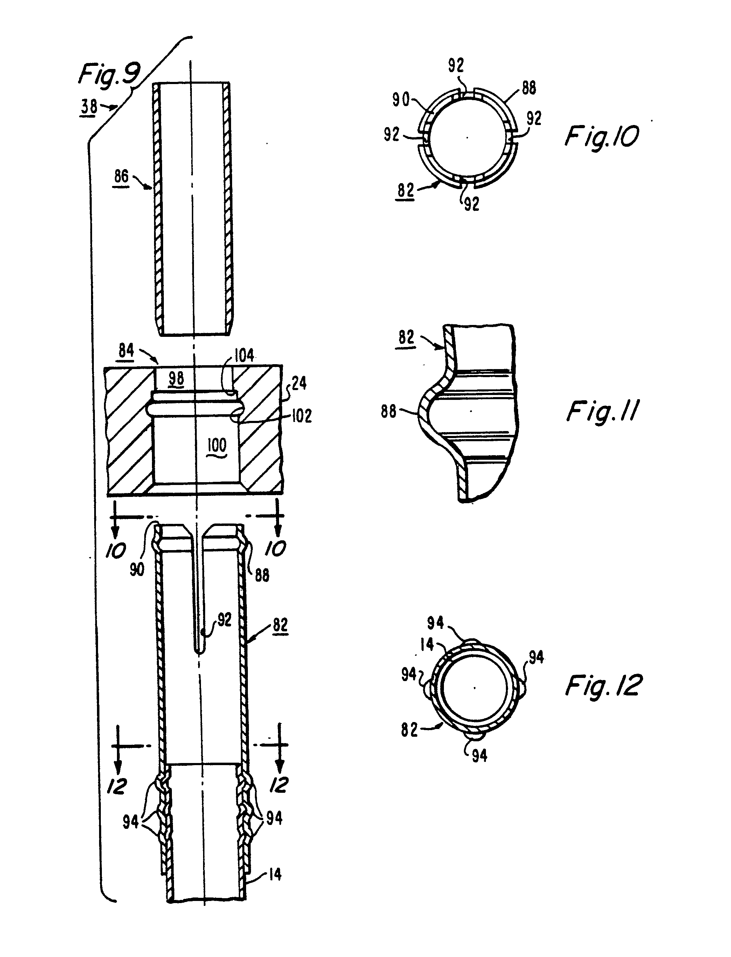

While the preceding embodiments differ from each other only with respect to the securing means for the locking member, the embodiment illustrated in Figs. 9 to 15 differs also in other respects in that its attaching structure employs a somewhat modified sleeve or inner socket 82, outer socket 84, and locking member 86.

More specifically, the inner socket 82 has a circumferential bulge 88 formed thereon only a short distance from its upper edge 90, is provided with four (instead of three) elongate slots 92 (see Fig. 10) in its upper end portion, and has its lower end portion bulgefitted to the guide thimble at three axially spaced regions by means of four bulges 94 per region spaced substantially equidistantly circumferentially about the socket 82. Fig. 11 shows the inner socket 82 somewhat modified in that its upper end portion above the circumferential bulge 88 is flared outward slightly, such as 4-5 degrees, for example.

The outer socket 84, preferably in the form of an axial passageway in the adapter plate 24 of the top nozzle 22, comprises an upper bore 98, a lower bore 100, and an annular groove 102 in the wall of bore 100. The lower bore 100 is longer than the upper bore 98 and the annular groove 102 therein is spaced a short distance below a ledge or shoulder 104 formed at the intersection between the upper and lower bores 98, 100. The lower bore 100 is larger in diameter than the upper bore 98, thus forming the ledge 104 which faces downward and serves as a stop cooperating with the upper edge 90 of the inner socket 82, as the latter is being inserted into the outer socket 84, to stop the inner socket 82 in its proper axial position in which its bulge 88 becomes engaged with the groove 102 in the outer socket 84.

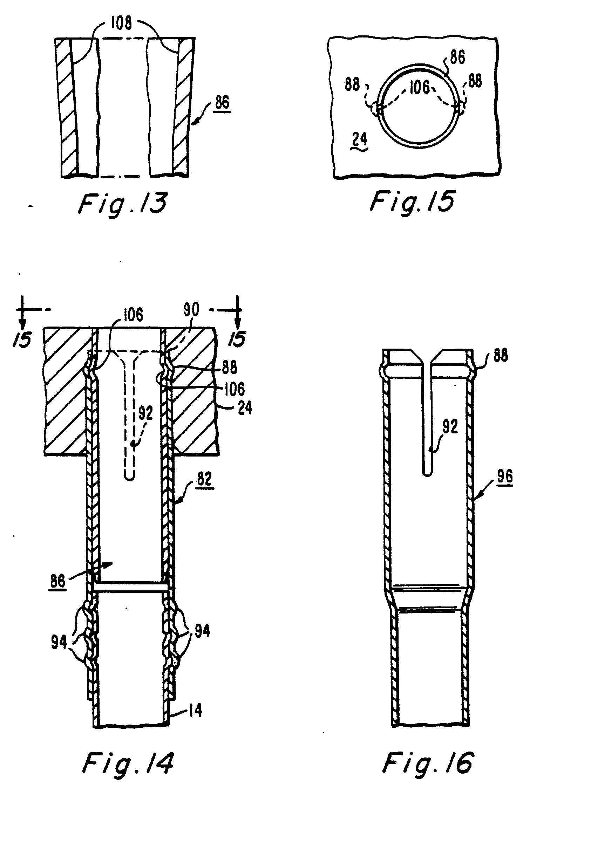

The securing means for the locking member 86 in this embodiment take the form of a pair of bulges 106 (Fig. 15) formed into the upper portion of the locking member 86, after insertion of the latter into the passageway, so as to provide a bulge-fit with the circumferential groove defined by the inner surface of the annular bulge 88 on the inner socket 82. Instead of and preferably in addition to the bulges 106, the locking member 86 may have an upper peripheral edge portion 108 (Fig. 13) flared outward slightly, that is, just sufficiently (e.g. 1 to 2 degrees) to result in a firm friction fit between the edge portion 108 and the peripheral wall of the upper bore 98 when the locking member 86 is in its locking position.

Referring finally to Fig. 16, it shows a modified inner socket 96 which is similar to the inner socket 82 shown in Figs. 9 to 14 except that the socket 96 is not a separate item but is formed as an integral part or upper extension of the thimble 14. It will be appreciated that the inner sockets employed in the other embodiments described herein could be modified in a similar manner.

### Claims

1. A fuel assembly including a control-rod guide-thimble (14), a top nozzle (22) including a transverse plate (24), and an attaching structure (38) removably mounting the top nozzle on the guide thimble, said attaching structure (38) comprising a passageway which extends through said plate (24) and defines an outer socket (42/Figs. 2-8 or 84/Figs. 9-16) having therein an annular groove (58/Figs. 2-8 or 102/Figs. 9-16), said passageway comprising a lower bore (56/Figs. 2-8 or 100/Figs. 9-16) which has said annular groove (58/Figs.2-8 or 102/Figs.9-16) located therein in spaced relationship with respect to both ends of the lower bore, and an additional bore (54/Figs.2-8 or 98/Figs.9-16) located directly above said lower bore and communicating therewith, said lower bore (56 or 100) having a diameter substantially equal to the outer diameter of an inner socket (40 or 82 or 96) and having said upper end portion of the latter inserted therein; a sleeve-like inner socket (40/Figs.2-8 or 82/Figs.9-15 or 96/Fig.16) on the upper end of the guide thimble which has a circumferential bulge (48/Figs. 2-8 or 88/Figs. 9-16) formed on an upper end portion thereof and adapted to mate with said annular groove, said sleeve-like inner socket being elastically movable between a compressed releasing position enabling the inner socket to be inserted into and removed from the outer socket, and an expanded locking position for engaging said bulge with said groove and thereby interlocking the inner and outer sockets with each other; and an elongate locking member (44/Figs. 2-8 or 86/Figs.9-16) removably inserted into said inner socket, within the outer socket, in relationship therewith for retaining the inner socket in its locking position and thereby maintaining attachment of the top nozzle to the guide thimble, said locking member (44/Figs. 2-8 or 86/Figs. 9-16) a tube having an outer diameter substantially equal to the inner diameter of the sleeve-like inner socket (46/Figs. 2-8 or 82/Figs. 9-15 or 96/Fig.16) and extending into the latter through said additional bore (54/Figs.2-8 or 98/Figs.9-16), characterized in that said additional bore (54 or 98) is smaller in diameter than said lower bore (56 or 100) so as to form, at the intersection therewith, a downwardly facing ledge (62/Figs.2-8 or 104/Figs.9-16) adapted to cooperate with the upper end of the sleeve-like inner socket (40 or 82 or 96) to assist in aligning said circumferential bulge (48 or 88) with said annular groove (58 or 102).

2. A fuel assembly according to claim 1, characterized in that the width of said downwardly facing ledge (62 or 104) is substantially equal to the wall-thickness of the sleeve-like inner socket (40 or 82 or 96).

3. A fuel assembly according to claim 1 or 2, characterized in that the diameter of said additional bore (54 or 98) is equal to the inner diameter of the sleeve-like inner socket (40 or 82 or 96) and slightly larger than the outer diameter of the locking tube (44 or 86).

4. A fuel assembly according to claim 1, 2 or 3, characterized in that said passageway includes an upper bore (52/Figs. 2-8) which is located directly above said additional bore (54) and communicates therewith, said upper bore (52) being larger in diameter than said additional bore (54) so as to form an upwardly facing ledge (60) at the intersection therewith, and said locking tube (44) having, adjacent its upper end, a radial flange (66/Figs.2-8) which is disposed within said upper bore (52) and rests upon said upwardly facing ledge (60) when the locking tube is inserted in the inner socket (40).

5. A fuel assembly according to any one of the preceding claims, characterized in that said locking member (44 or 86) has associated therewith means (68-70/Figs.2-5 or 72-74/Fig.6 or 76-78/Fig.7 or 80/Fig.8 or 106/Figs.14-15 or 108/Fig.13) for securing the inserted locking member against displacement thereof relative to the inner socket (40 or 82 or 96).

6. A fuel assembly according to claim 5, characterized in that the securing means comprises a deformable flange (68) extending from the locking member (44) and deformed into interlocking engagement with locking indentations (70) formed in said transverse plate (24) of the top nozzle. (Figs. 2-5).

7. A fuel assembly according to claim 5, characterized in that the securing means comprises an annular recess (74) formed in said transverse plate (24) of the top nozzle, and a split retainer ring (72) seated in said recess and disposed in retaining engagement with the locking member (44). (Fig. 6).

8. A fuel assembly according to claim 5, characterized in that the securing means comprises a circumferential bulge (80) formed on the locking member (44) and retainably engaging the inner socket (40). (Fig. 8).

9. A fuel assembly according to claim 5, characterized in that the securing means comprises at least one bulge (106) formed in the locking member (86) and extending into retaining engagement with the concave side of the circumferential bulge (88) of the inner socket (82).(Figs. 14-15).

10. A fuel assembly according to any one of the preceding claims, characterized in that the locking member (86) has an upper peripheral edge portion (108/Fig. 13) which is flared outward so as to engage and to form a frictional fit with a wall portion of said passageway when the locking member is inserted in the inner socket (40/Figs.2-8 or 82/Figs.9-15 or 96/Fig.16).

## Patentansprüche

1. Eien Brennelementanordnung, bestehend aus einer Steuer stab-Tauchhülse (14), einer Kopfdüse (22) mit einer Querplatte (24) und einem Anschlußstück (38) zum lösbaren Befestigen der Kopfdüse an der Tauchhülse, wobei das Anschlußstück (38) einen durch die Platte (24) geführten Durchlaß aufweist, der die lichte Weise einer Außenbuchse (42/Fig. 2 bis 8; bzw. 84/Fig. 9 bis 16) bestimmt, in der eine ringförmig umlaufende Nut (58/ Fig. 2 bis 8; bzw. 102/Fig. 9 bis 16) ausgespart und im Durchlaß in einer unteren Bohrung (56/Fig. 2 bis 8; bzw.100/Fig. 9 bis 16) im Abstand von den Enden dieser Bohrung angeordnet ist, und eine zusätzliche Bohrung (54/Fig. 2 bis 8; bzw. 98/Fig. 9 bis 16) unmittelbar über der unteren Bohrung mit dieser kommuniziert, der Durchmesser der unteren Bohrung (56, bzw. 100) im wesentlichen dem Außendurchmesser einer Innenbuchse (40, bzw. 82, bzw. 96) entspricht, deren oberes Endstück in die untere Bohrung gesteckt ist; eine hülsenartige Innenbuchse (40/ Fig. 2 bis 8; bzw. 82/Fig. 9 bis 15; bzw. 96/Fig. 16) am oberen Ende der Tauchhülse einen in die ringförmige Nut passenden umlaufenden Wulst (48/Fig. 2 bis 8; bzw. 88/Fig. 9 bis 16) aufweist, wobei diese Innenbuchse elastisch komprimierbar ist, derart, daß sie in die Außenbuchse einsetzbar und daraus lösbar ist, und im entspannten Zustand in die Nut eingreift und dabei die Innenbuchse mit der Außenbuchse verbindet; und ein längliches Sperrelement (44/Fig. 2 bis 8; bzw 86/Fig 9 bis 16)lösbar in die in der Außenbuchse befindlichen Innenbuchse eingesetzt ist und die Innenbuchse in Sperrstellung hält und dabei die Befestigung der Kopfdüse an der Tauchhülse sichert, das Sperrelement (44/Fig.2 bis 8; bzw. 86/Fig. 9 bis 16) eine Hülse ist, deren Außendurchmesser im wesentlichen dem Innendurchmesser der hülsenartigen Innenbuchse (46/ Fig. 2 bis 8; bzw. 82/Fig. 9 bis 15; bzw. 96/Fig. 16) entspricht und die in die zusätzliche Bohrung (54/Fig. 2 bis 8; bzw.98/Fig. 9 bis 16) der Innenbuchse gesteckt ist, dadurch gekennzeichnet, daß die zusätzliche Bohrung (54, bzw. 98) kleiner ist als die untere Bohrung (56, bzw. 100), derart, daß an der Stoßstelle ein nach unten weisender Absatz (62/Fig. 2 bis 8; bzw. 104/Fig. 9 bis 16) gebildet ist, der mit dem oberen Ende der hülsenartigen Innenbuchse (40, bzw. 82, bzw. 96) zusammenwirkt und dabei das Ausrichten des umlaufenden Wulstes (48, bzw. 88) mit der ringförmigen Nut (58, bzw. 102) sichert.

2. Brennelementanordnung nach Anspruch 1, dadurch gekennzeichnet, daß die Breite des nach unten weisenden Absatzes (62, bzw. 104) im wesentlichen der Wandstärke der hülsenartigen Innenbuchse (40, bzw. 82, bzw. 96) entspricht.

3. Brennelementanordnung nach Anspruch 1 oder 2, dadurch gekennzeichnet, daß der Durchmesser der zusätzlichen Bohrung (54, bzw. 98) dem Innendurchmesser der hülsenartigen Innenbuchse (40, bzw. 82, bzw. 96) entspricht und etwas größer ist als der Außendurchmesser der Sperrhülse (44, bzw. 86).

4. Brennelementanordnung nach Anspruch 1, 2 oder 3, dadurch gekennzeichnet, daß der Durchlaß eine obere Bohrung (52/Fig. 2 bis 8) aufweist, die unmittelbar über der zusätzlichen Bohrung (54) angeordnet ist und mit dieser kommuniziert, der Durchmesser der oberen Bohrung (52) größer ist als der Durchmesser der zusätzlichen Bohrung (54), derart, daß an der Stoßstelle ein nach oben weisender Absatz (60) gebildet ist, und angrenzend an das obere Ende der Sperrhülse (44) innerhalb der oberen Bohrung (52) ein radial abstehender Flansch (66/Fig. 2 bis 8) angeordnet ist und auf dem nach oben weisenden Absatz (60) sitzt, wenn die Sperrhülse in die Innenbuchse (40) eingesetzt ist.

5. Brennelementanordnung nach einem der vorhergehenden Ansprüche, dadurch gekennzeichnet, daß dem Sperrelement (44, bzw. 86) Mittel (68-70/Fig. 2 bis 5; bzw. 72-74/Fig. 6; bzw. 76-78/Fig. 7; bzw. 80/Fig. 8; bzw. 106/Fig. 14 bis 15; bzw. 108/Fig. 13) zur Sicherung gegen Verschieben des eingesetzten Sperrelements in Bezug zur Innenbuchse (40, bzw. 82, bzw. 96) zugeordnet sind.

6. Brennelementanordnung nach Anspruch 5, dadurch gekennzeichnet, daß die Sicherungsmittel einen verformbaren Flansch (68) aufweisen, der vom Sperrelement (44) absteht und verformt in Rastkerben (70) eingreift, die in der Querplatte (24) der Kopfdüse angeordnet sind, (Fig. 2 bis 5).

7. Brennelementanordnung nach Anspruch 5, dadurch gekennzeichnet, daß die Sicherungsmittel eine in der Querplatte (24) der Kopfdüse ausgesparte ringförmige Ausnehmung (74) aufweisen, in der ein gespaltener Haltering (72) eingesetzt ist und haltend in das Sperrelement (44) eingreift (Fig. 6).

8. Brennelementanordnung nach Anspruch 5, dadurch gekennzeichnet, daß die Sicherungsmittel einen im Sperrelement (44) vorgesehenen umlaufenden Wulst (80) aufweisen, der in die Innenbuchse (40) haltend eingreift (Fig. 8).

9. Brennelementanordnung nach Anspruch 5, dadurch gekennzeichnet, daß die Sicherungsmittel mindestens einen im Sperrelement (86) vorgesehenen Wulst (106) aufweisen, der mit der Konkavseite der umlaufenden Wulst (88) der Innenbuchse (82) zusammenwirkt und in diese haltend eingreift (Fig. 14-15).

10. Brennelementanordnung nach einem der vorhergehenden Ansprüche, dadurch gekennzeichnet, daß das Sperrelement (86) einen oberen, nach außen konisch erweiterten Umfangsrandabschnitt (108/Fig. 13) aufweist, der einen Wandabschnitt des Durchlasses berührt und hier einen Reibungssitz bildet, wenn das Sperrelement in die Innenbuchse (40/Fig. 2 bis 8; bzw. 82/Fig. 9 bis 15; bzw. 96/Fig. 16) eingesetzt ist.

**Revendications**

1. Assemblage combustible comprenant un tube de guidage (14) de barres de controle, un embout supérieur (22) comprenant une plaque transversale (24), et une structure de fixation (38) qui monte de façon démontable l'embout supérieur sur le tube de guidage, ladite structure de fixation (38) comprenant un passage qui s'etend a travers ladite plaque (24) et définit une prise extérieure (42/figures 2 à 8 ou 84/figures 9 à 16) possédant à l'interieur une rainure annulaire (58/figures 2 à 8 ou 102/figures 9 à 16), ledit passage comprenant un trou inférieur (56/figures 2 à 8 ou 100/figures 9 à 16) dans lequel se trouve ladite rainure annulaire (58/figures 2 à 8 ou 102/figures 9 à 16) a distance des deux extrémités du trou inférieur, et un trou supplémentaire (54/figures 2 à 8 ou 98/figures 9 à 16) situé directement au-dessus dudit trou inférieur et communiquant avec celui-ci, ledit trou inférieur (56 ou 100) possédant un diamètre sensiblement égal au diamètre extérieur d'une prise intérieure (40 ou 82 ou 96) et recevant ladite portion terminale supérieure de cette prise; une prise intérieure en forme de manchon (40/figures 2 à 8 ou 82/figures 9 à 15 ou 96/figure 16) sur l'extremite supérieure du tube de guidage qui possède un bombement circonférentiel (48/figures 2 à 8 ou 88/figures 9 à 16) forme a une extrémité supérieure de cette prise et adapte pour un accouplement, avec ladite rainure annulaire, ladite prise intérieure en forme de manchon pouvant ètre déplacée de façon élastique entre une position comprimée de dégagement permettant d'insérer la prise intérieure dans la prise extérieure et de l'en retirer, et une position dilatée de blocage pour engager ledit bombement dans la rainure et pour relier ainsi l'une à l'autre la prise intérieure et la prise extérieure; et un organe allongé de blocage (44/figures 2 à 8 ou 86/figures 9 à 16) inséré de façon démontable dans ladite prise intérieure, à l'intérieur de la prise extérieure, en relation avec cette prise intérieure, afin de retenir la prise intérieure dans sa position de blocage et de maintenir ainsi la fixation de l'embout supérieur au tube de guidage, ledit organe de blocage (44/figures 2 à 8 ou 86/figures 9 à 16) étant un tube possédant un diamètre extérieur sensiblement egal au diamètre intérieur de la prise intérieure en forme de manchon 40/figures 2 à 8 ou 82/figures 9 a 15 ou 96/fig. 16) et s'étendant dans cette dernière à travers ledit trou supplémentaire (54/figures 2 à 8 ou 98/figures 9 à 16), caractérisé en ce que le diamètre dudit trou supplémentaire (54 ou 98) est inférieur a celui dudit trou inférieur (56 ou 100) de manière à former, à l'intersection avec celui-ci, un rebord tourne vers le bas (62/figures 2 à 8 ou 104/figures 9 à 16) adapte pour coopérer avec l'extrémité supérieure de la prise intérieure en forme de manchon (40 ou 82 ou 96) afin d'aider a aligner ledit bombement circonférentiel (48 ou 88) avec ladite rainure annulaire (58 ou 102).

2. Assemblage combustible selon la revendication 1, caractérisé en ce que la largeur du rebord (62 ou 104) tourne vers le bas est sensiblement égale à l'épaisseur de paroi de la prise intérieure en forme de manchon (40 ou 82 ou 96).

3. Assemblage combustible selon la revendication 1 ou 2, caractérisé en ce que le diamètre dudit trou supplémentaire (54 ou 98) est égal au diamètre intérieur de la prise intérieure en forme de manchon (40 ou 82 ou 96) et légèrement plus grand que le diamètre extérieur du tube de blocage (44 ou 86).

4. Assemblage combustible selon l'une quelconque des revendications 1, 2 ou 3, caractérisé en ce que ledit passage comprend un trou supérieur (52/figures 2 à 8) qui se trouve directement au-dessus dudit trou supplémentaire, (54) et communique avec celui-ci, ledit trou supérieur (52) possédant un diamètre supérieur a celui du trou supplémentaire, de manière a former un épaulement (60) tourne vers le haut a l'intersection de ces trous, et ledit tube de blocage (44) possédant, de façon adjacente a son extrémité, supérieure, une collerette radiale (66/figures 2 à 8) qui est disposée dans ledit trou supérieur (52) et repose sur le rebord (60) tourne vers le haut lorsque le tube de blocage est insere dans la prise intérieure (40).

5. Assemblage combustible selon l'une quelconque des revendications précédentes, caractérise en ce qu'audit organe de blocage 44 ou 86) est associe un moyen (68-70/figures 2 à 5 ou 72-74/figure 6 ou 76-78/figure 7 ou 80/figure 8 ou 106/figures 14 et 15 ou 108/figure 13) pour fixer l'organe de blocage insère, afin d'empecher qu'il ne se déplace par rapport à la prise intérieure (40 ou 82 ou 96).

6. Assemblage combustible selon la revendication 5, caractérisé en ce que le moyen de fixation comprend une collerette (68) deformable qui s'étend à partir de l'organe de blocage (44) et qui est déformée pour venir en prise de blocage avec des renfoncements de blocage (70) formés dans ladite plaque transversale (24) de l'embout supérieur (figures 2 à 5).

7. Assemblage combustible selon la revendication 5, caractérise en ce que le moyen de fixation comprend un evidement annulaire (74) formé dans ladite plaque transversale (24) de l'embout supérieur, et une bague de retenue (72) fendue qui est placée dans ledit évidement et est disposée dans une 1 liaison de retenue avec l'organe de blocage (44). (Figure 6).

8. Assemblage combustible selon la revendication 5, caractérisé en ce que le moyen de fixation comprend un bombement circonferentiel (80) formé sur l'organe de blocage (44) et venant en prise avec la prise intérieure 40) pour retenir celle-ci. (Figure 8).

9. Assemblage combustible selon la revendication 5, caractérise en ce que le moyen de fixation comprend au moins un bombement (106) formé dans l'organe de blocage (86) et s'étendant dans une liaison de retenue avec la face concave du bombement circonférentiel (88) de la prise intérieure (82). (Figures 14 et 15).

10. Assemblage combustible selon l'une quelconque de revendications précédentes, caractérisé en ce que l'organe de blocage (86) possède une portion de bord périphérique supérieur 108/figure 13) qui est èvasée vers l'extérieur de manière à venir prise avec une portion de paroi dudit passage et de former un serrage par friction avec celle-ci lorsque l'organe de blocage es inséré dans la prise intérieure (40/figures 2 à 8 ou 82/figures 9 a 15 ou 96/figure 16).

Fig. I

Fig. 2

Fig. 3

Fig. 5

Fig. 4

2

*Fig. 6*

38

72

74

66

24    48

64

46

*Fig. 7*

38

76

78

66

48

24

64

46

*Fig. 8*

38

66

80

48

24

64

46

0 140 588

Fig.9

Fig.10

Fig.11

Fig.12

4

Fig.13

Fig.15

Fig.14

Fig.16